# EUROPEAN PATENT SPECIFICATION

(11) **EP 2 061 266 B1**
(45) Date of publication and mention of the grant of the patent: **16.11.2011**
(21) Application number: 07801031.1
(22) Date of filing: 04.09.2007
(51) Int. Cl.: H04W 4/06, H04L 12/56

(54) **Method, apparatus and system for sending MBMS service in IP load-carrying web**
Verfahren, Vorrichtung und System zum Senden des MBMS-Dienstes im IP-Lasttragenden Web
Procédé, appareil et système de transmission de services MBMS dans un réseau de trafic IP

(30) Priority: 06.09.2006 CN 200610126923
(43) Date of publication of application: 20.05.2009
(73) Proprietor: Huawei Technologies Co., Ltd., Longgang District, Shenzhen Guangdong 518129 (CN)
(72) Inventor: CHEN, Jian, Shenzhen Guangdong 518129 (CN); ZENG, Xu, Shenzhen Guangdong 518129 (CN); HU, Jun, Shenzhen Guangdong 518129 (CN)
(74) Representative: Gulde Hengelhaupt Ziebig & Schneider
(86) International application number: PCT/CN2007/070622
(87) International publication number: WO 2008/040202

(56) References cited:
- EP-A- 1 610 502
- WO-A-2005/101752
- CN-A- 1 744 572
- CN-A- 1 761 953
- US-A1- 2005 080 901
- US-A1- 2005 080 901

## Description

### FIELD OF THE INVENTION

The invention relates generally to the technology of broadcasting/multicasting. The invention relates particularly to a method for distributing Multimedia Broadcasting/Multicasting Service (MBMS) services in an Internet Protocol (IP) Bearer Network, and to a corresponding base station apparatus, an upper layer network node apparatus and a communication system.

### BACKGROUND

Multicasting and broadcasting are technologies for transmitting data from one data source to a plurality of targets.

The need for mobile communication is now no longer limited to the telephone and message services. With the rapid development of the Internet, a lot of mobile multimedia services spring up. In some of the mobile multimedia services, such as Video-On-Demand, television broadcasting, video meeting, network education, interactive games, it is required that the same data can be received simultaneously by a plurality of users. Compared with an ordinary data service, such mobile multimedia services are characterized by their large amount of data, long durations and sensitiveness to time delays.

For the efficient use of resources of mobile communication networks, the MBMS in mobile communication networks has been proposed by the Global Standardization Organization for the Third Generation Mobile Communication (3GPP), in order to provide a Point-To-Multipoint service which transmits data from one data source to a plurality of users in a mobile communication network, to realize network resource sharing and to increase the utility of network resources especially air interface resources. The MBMS proposed by 3GPP may realize not only multicasting and broadcasting of the type of messages with pure texts and low speed, but also multicasting and broadcasting of high-speed multimedia services. It is in accordance with the development trend of future mobile data communication without any doubt.

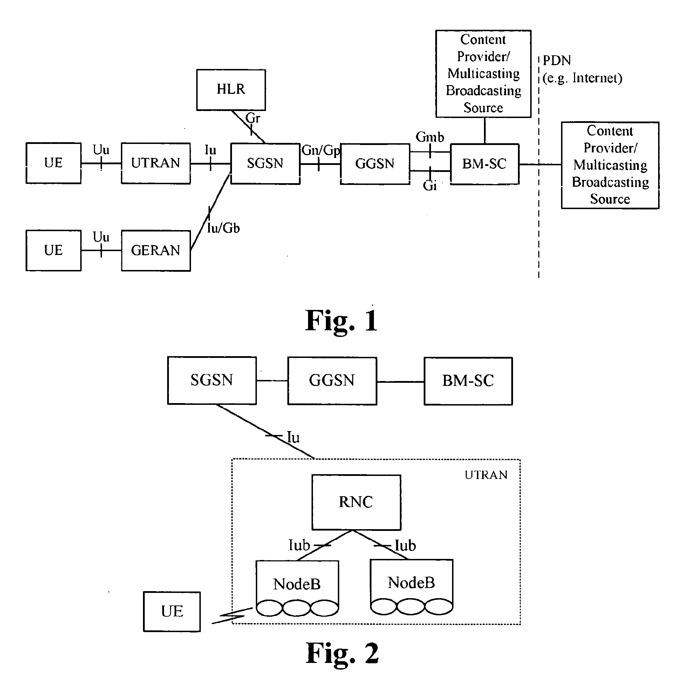

In order to support the MBMS service in existing mobile communication networks, a mobile network function entity, i.e. Broadcasting/Multicasting Service Center (BM-SC), is added in the Third Generation Mobile Communication System. The BM-SC is an entry for content providers and used for authorizing and initiating the MBMS service in a mobile network, and for sending MBMS contents according to predetermined time schedule. Furthermore, functions associated with the MBMS are added in function entities such as UE, Universal Mobile Telecommunication System (UMTS) Terrestrial Radio Access Network (UTRAN), Global Mobile Communication System Enhanced Radio Access Network (GERAN), Serving GPRS Support Node (SGSN) and Gateway GPRS Support Node (GGSN) in existing wireless communication networks. For the diagram illustrating the structure of wireless networks which support Broadcasting/Multicasting Service, please refer to related protocols, and the description of which will not be repeated. Fig. 1 is a diagram illustrating the architecture of an existing MBMS network. As illustrated in Fig. 1, the edge of the MBMS Bearer Service is the Gmb and the Gi reference points, that is, the interface between the BM-SC and the GGSN. The Gmb interface provides the functions of control plane, and the Gi interface provides the bearer functions of a user plane.

In a mobile communication network supporting MBMS services, the MBMS has a multicasting mode and a broadcasting mode. In the multicasting mode, the user is required to subscribe in a respective multicasting group and perform service activation; and respective charging information is generated. Because differences exist between service requirements of the multicasting mode and the broadcasting mode, service processes in different modes are different. The specific processes may be found in respective protocols and the description of which will not be repeated here.

Fig. 2 is a diagram illustrating the location of the Iub interface in the network shown in Fig. 1. As shown in Fig. 2, a Wide-band Code Division Multiple Address (WCDMA) system is taken as an example. The lub interface is an interface between the Radio Network Controller (RNC) and the base station NodeB. The traditional bearer of an Iub interface is performed using E1/T1. But the resources of E1/T1 are limited, and the configuration is troublesome. With the maturation of High Speed Packet Access (HSPA) technology and its application, an IP bearer for the Iub interface is proposed. In an IP RAN, IP bearer is characterized by a wide band, multiple access modes and flexibility in configuration, which brings the providers more competing power.

With the evolution of HSPA technology, the bandwidth of the lub interface can not satisfy the requirements unless the bandwidth reaches more than 30 M. If the traditional E1/T1 method is still used, the cost is very high. The wide band of IP bearer may satisfy the requirements of the evolution of HSPA technology. With the whole network being unified with IP, a NodeB may connect the network with x Digital Subscriber Line (xDSL) or Ethernet. The deployment is very flexible, and the mapping between apparatus may be realized by changing IP addresses.

Currently, for the distribution of MBMS service, each NodeB transmits the same MBMS service data in the cells that the NodeB administrates. But at the Iub interface, the same MBMS service data are sent once for each NodeB, even for each cell. This causes a waste of a lot of bandwidth. Take the hypothetical case that an RNC connects 100 NodeBs as an example, in which each NodeB administrates 2 cells. If 16 channels of 256 kbps are established, the bandwidth required is 800 Mbps.

For the existing method for the distribution of MBMS service through an Iub interface, the same MBMS service data are sent once for each NodeB, even for each cell. This causes great waste of bandwidth, increases the load of the network, and increases the investment of providers.

WCDMA system is taken as an example in the previous description. But it should be understood that, in the process of network evolution, similar problems will still exists in systems such as Enhanced HSPA (E-HSPA), 3GPP Long Term Evolution Plan/System Architecture Evolution system (LTE/SAE).
WO 2005/101752 A discloses a wireless communications network comprising a base station subsystem controlling at least one network cell, and in which the base station subsystem communicates with mobile stations in the cell through radio blocks.
US 2005/080901 A1 discloses a method and apparatus for authorizing multicast group membership based on network policies, such as machine and user identities.

### SUMMARY

Embodiments of the present invention provide a method, apparatus and system for distributing MBMS services in an IP Bearer Network.

The solutions of embodiments of the present invention are as follows.

One embodiment of the invention provides a method for distributing Multimedia Broadcasting/Multicasting Service (MBMS) service in an IP Bearer Network, the method includes the following. A base station receives MBMS service data which use a multicasting IP address and are sent by an upper network node by means of multicasting in the IP Bearer Network, according to the multicasting IP address configured beforehand or sent by the upper network node, where the destination IP address of the MBMS services data is filled with the multicasting IP address. The base station distributes the received MBMS service data.

One embodiment of the invention provides a base station configured to distribute Multimedia Broadcasting/Multicasting Service (MBMS) service in a communication system comprising an IP Bearer Network. The base station includes a receiving unit adapted to receive MBMS service data which use a multicasting IP address and are sent by an upper network node by means of multicasting in the IP Bearer Network, according to the multicasting IP address configured beforehand or sent by the upper network node, where the destination IP address of the MBMS services data is filled with the multicasting IP address. The base station includes also a distributing unit adapted to distribute the MBMS service data received by the receiving unit.

One embodiment of the invention provides an upper network node configured to transmit MBMS service in a communication system comprising an IP Bearer Network. The system further includes a base station. The upper network node includes a data transmission unit adapted to transmit the base station MBMS service data which use a multicasting IP address by means of multicasting in the IP Bearer Network, where the destination IP address of the MBMS services data is filled with the multicasting IP address.

Another embodiment of the invention provides a communication system configured to distribute MBMS service in an IP Bearer Network. The system includes a base station and an upper network node. The base station is configured to receive MBMS service data which use a multicasting IP address and are sent by an upper network node by means of multicasting in the IP Bearer Network according to the multicasting IP address configured beforehand or sent by a upper network node, and distribute the received MBMS service data. The upper network node is configured to send the base station the MBMS service data which use the multicasting IP address by means of multicasting in the IP Bearer Network, where the destination IP address of the MBMS services data is filled with the multicasting IP address.

From the solutions described above, it is obvious that, because the MBMS service data are distributed by means of multicasting in the IP Bearer Network, the upper network node needs to distribute to all the base stations only once. After the MBMS service data sent by the upper network node are received, the base station distributes the MBMS service data in the corresponding cells. Therefore, in the IP Bearer Network, the same MBMS service data needs to be sent by the upper network node only once for all the base stations controlled by the upper network node. Thus, band width is greatly saved, load on network is decreased and the cost of providers is lowered.

### BRIEF DESCRIPTION OF THE DRAWINGS

Fig. 1 is a diagram illustrating the structure of a network supporting MBMS in the prior art;

Fig. 2 is a diagram illustrating the location of the Iub interface in the network shown in Fig. 1;

Fig. 3 is a flowchart illustrating the method in one embodiment of the invention;

Fig. 4 is a flowchart illustrating the process of node synchronization notification in one embodiment of the invention;

Fig. 5 is a network diagram of the E-HSPA flat architecture;

Fig. 6 is a flowchart illustrating the method in the E-HSPA flat architecture in one embodiment of the invention;

Fig. 7 is a network diagram of the LTE/SAE flat architecture;

Fig. 8 is a flowchart illustrating the method in the LTE/SAE flat architecture in one embodiment of the invention;

Fig. 9 is a diagram illustrating the structure of the base station in one embodiment of the invention; and

Fig. 10 is a diagram illustrating the structure of the upper network node in one embodiment of the invention.

### DETAILED DESCRIPTION

An embodiment of the invention provides a solution herein. A base station receives MBMS service data which use a multicasting IP address and are sent by an upper network node by means of multicasting in an IP Bearer Network, according to the multicasting IP address configured beforehand or sent by the upper network node, and distributes the received MBMS service data.

The embodiments of the invention will be described in detail with reference to the figures, in order to make the object, the technical solution and the advantages of the invention more obvious.

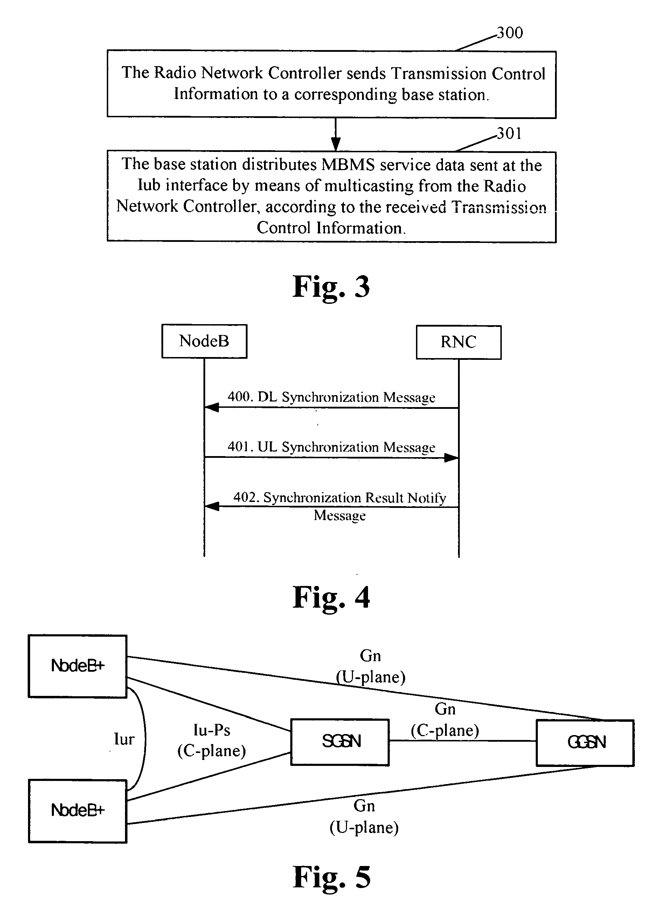

Fig. 3 is a flowchart illustrating the method in one embodiment of the invention. The embodiment takes a WCDMA system as an example for description. In the system provided by the embodiment, the upper network node is an RNC. As shown in Fig. 3, the method includes the following steps:

Step 300: The Radio Network Controller sends Transmission Control Information to a corresponding base station.

In this step, taking a WCDMA as an example, when the RNC needs to transmit data in a certain cell, the RNC sends a Transmission Initiation Notification (such as a Channel Establishing Request Message) to the NodeB which the cell belongs to. The Transmission Control Information is carried in the Transmission Initiation Notification.

The Transmission Control Information includes at least: destination information, such as the cell identification (ID) of the cell in which transmission needs to be initiated; transmission channel information, such as the ID of the Secondary Common Control Physical Channel (S-CCPCH) through which MBMS service data are transmitted; and address information of the MBMS service data which need to be transmitted, i.e. the multicasting IP address used by the MBMS service data in the IP network. It should be understood that the multicasting IP address may be configured locally (configured beforehand). For example, the RNC and base station may be configured by an Operation Maintenance Center (OMC). To comply with this case, the Transmission Control Information may include no multicasting IP address. The embodiment is described with the RNC sending the multicasting IP address as an example, but the invention is not limited to this.

It should be noted that an RNC manages NodeBs which the RNC connects with and User Equipments (UE) in the cells administrated by the NodeBs. The RNC knows whether an UE has entered a certain cell, or has left a certain cell. In other words, the RNC knows whether there are any users in the coverage of a certain cell, and whether the number of users has exceeded the threshold of conversion from Point-To-Point (PTP) to Point-To-Multipoint (PTM). This is realized with other existing management processes, such as the counting ofUEs. The specific realization may be found in related protocols and is not related with the invention. Therefore, the description will not be repeated here.

Step 301: The base station distributes MBMS service data sent at the Iub interface by means of multicasting from the Radio Network Controller, according to the received Transmission Control Information.

The NodeB receives the MBMS service data which use the above mentioned multicasting IP address and are sent by the RNC. When the MBMS service data are sent to the NodeB, the NodeB distributes the MBMS service data which use the above mentioned multicasting IP address through the S-CCPCH specified for transmitting the MBMS service data, in a cell corresponding to the cell ID, according to the received Transmission Control Information.

Furthermore, the NodeB may reply a Transmission Initiation Notification Response to the RNC.

From the method provided by an embodiment of the invention, it is obvious that, because the MBMS service data are distributed by means of multicasting in the IP Bearer Network, it is required to send by the RNC only once to all the base stations for the same kind of MBMS service data, the base station receives the MBMS service data in the form of multicasting, in the IP Bearer Network, according to the destination address for multicasting notified by the upper network node (e.g., the upper network node is an RNC at this embodiment), and transmits the MBMS service data in the cells which require the transmission. Therefore, the same MBMS service data are required to be sent by the RNC only once for all NodeBs controlled by the RNC. Thus, band width is greatly saved, the load on network is decreased, and the cost of providers is lowered.

Moreover, if the NodeB has not joined the multicasting group which the multicasting IP address belongs to, after the NodeB receives the Transmission Initiation Notification, the NodeB sends an Internet Group Management Protocol Join (IGMP JOIN) message to the IP network, notifying the network that the NodeB needs to receive the multicasting data corresponding to the multicasting IP address. The process of sending IGMP JOIN message to the network to join the multicasting group is known in the prior art, which may be found in respective protocols, and the description of which will not be repeated here.

When the RNC needs not to transmit data in a certain cell (e.g., there are no users in the certain cell), the RNC sends a Stop Transmission Notification containing Stop Control Information to the NodeB. Herein, the Stop Control Information includes at least: destination information, such as the ID of the cell which needs to stop transmission; and address information of the MBMS service data of which the transmission needs to be stopped, i.e. the multicasting/broadcasting IP address used in the IP network by the MBMS service data. Furthermore, the NodeB may reply a Stop Transmission Notification Response to the RNC.

When none of the cells of the NodeB needs to receive certain MBMS service data, the NodeB sends IGMP LEAVE message to the IP network, notifying the network that the NodeB leaves the multicasting group which the corresponding multicasting IP address belongs to. The process of sending IGMP LEAVE message to the network to leave the multicasting group is known in the prior art, which may be found in respective protocols, and the description will not be repeated here.

Additionally, as well known, when an UE is at the border of a cell, the quality of the received data is low. In order to ensure the quality of the data received by the UE, the UE receives data of a neighboring cell simultaneously, and combines the data from different cells of the cell and the neighboring cell. In this case, it should be ensured that data from different cells reach the UE almost simultaneously, so that the UE is able to realize soft combination of air interfaces.

To ensure soft combination of air interfaces, it is regulated by the protocol that time differences between transmissions of data by NodeBs should not exceed a predefined time length. The time length may also be called allowable range for soft combination of air interfaces. In the method provided by an embodiment of the invention, the same MBMS service data are sent only once at the lub interface, and are transmitted by NodeBs in each cell which requires the MBMS service data. However, since the NodeB does not know when to distribute data, the time interval between the transmissions of the same data by different cells may exceed the time length regulated by the protocol, thus, the time difference between the transmissions of the same data by the NodeBs can not be ensured to be in the allowable range for soft combination of air interfaces.

To solve this problem, an embodiment of the invention further includes the following steps. Time information about data transmission is distributed by the RNC during the process of node synchronization. This causes the NodeB to know when data should be distributed, and ensures the time differences between the transmissions of the same data by NodeBs being within the allowable range for soft combination of air interfaces. This will be described below by way of embodiments. Fig. 4 is a flowchart illustrating the process of node synchronization notification in one embodiment of the invention. As illustrated in Fig. 4, taking a WCDMA system as an example, the method includes the following steps:

Step 400: A Down Link (DL) Synchronization message is distributed by an RNC to a NodeB.

It is regulated by the protocol that an RNC Frame Number (RFN), i.e. a time identification of the data sent by the RNC, is carried in the DL Synchronization message.

Step 401: An Up Link (UL) Synchronization message is sent to the RNC by the NodeB.

It is regulated by the protocol that a NodeB Frame Number (BFN) and an RFN are carried in the UL Synchronization message. The BFN is the time identification of the data transmitted by the NodeB. Thus, the RNC learns about the relationship between the RFN and the BFN.

Step 402: A Synchronization Result Notification message is sent by the RNC to the NodeB.

In this step, the relationship between the RFN and the BFN is carried in the Synchronization Result Notification message.

By the process of node synchronization notification provided in the embodiment of the invention, the NodeB learns the relationship between the RFN and the BFN. Thus, if an RFN is carried in packets distributed by the RNC, for example, the RFN is carried in the header of each data block (TB), the NodeB may calculate a new BFN according to the received RFN and the relationship between an RFN and a BFN learned by the process of node synchronization notification, and transmit MBMS service data in the air interface according to the new BFN.

In the embodiment of the invention, a NodeB may obtain a BFN according to a unique RFN, since the RFN is unique and its cycling period is large enough, it is ensured that the time differences of service data transmissions in all cells of all NodeBs are within the allowable range for soft combination of air interfaces.

By the process of node synchronization notification provided in the embodiment of the invention, a NodeB learns the time of distributing MBMS service data The time differences of service data transmissions in all cells of all NodeBs are caused to be within the allowable range for soft combination of air interfaces. This ensurs that the UE may simultaneously receive data from neighbor cells, and may combine data from different cells. Thus the quality of data reception by the UE is ensured.

In the above, description is made with WCDMA system as an example. In order to increase the life cycle of WCDMA and enhance the protection for the investment of providers, a research plan of E-HSPA evolvement is proposed in 3GPP, which tries to increase spectrum efficiency on the basis of the existing R6 version, decrease the delay of the control plane and the user plane and may forwardly evolve smoothly into LTE/SAE system and be backwardly compatible, including increase in the performance of air interface and evolvement of the RAN architecture. The major direction of the current research on E-HSPA RAN architecture evolvement is the downward movement of the RNC into the NodeB.

Part of the E-HSPA flat architecture network diagram related to an embodiment of the invention is illustrated in Fig. 5. In the architecture, all the original RNC functions are downward moved into the Evolved HSPA NodeB (NodeB+). The NodeB+ connects with the core network SGSN directly through the IuPS interface, maintaining the interface of the existing core network and the air interface protocol. If one tunnel mode is supported, the user plane of the NodeB+ may connect the GGSN directly through a Gn interface, while the control plane still connects the SGSN through an luPS interface.

As described previously, MBMS service data has to be sent once for each NodeB even each cell administrated by each NodeB, thus the problem of bandwidth waste exists similarly in E-HSPA. A solution in the E-HSPA flat architecture is described below by way of embodiment. It should be noted that in the E-HSPA flat architecture, the upper network node may be an SGSN. Or, in the case that one tunnel is supported, since the user plane of the NodeB+ may connect GGSN directly through a Gn interface, the upper network may be composed of SGSNs and GGSNs. The SGSNs are responsible for the functions of control plane, and the GGSNs are responsible for the distribution of the data of the user plane. It is described below taking mainly the case that the upper network node is an SGSN as an example, but the invention is not limited to this.

Fig. 3 relates to a method flowchart of distributing MBMS services in an IP Bearer Network in an E-HSPA flat architecture. It may be understood similarly that the multicasting address may be distributed to the base station by an upper network node, and may alternatively be configured locally (configured beforehand). For example, the SGSN, the GGSN and the NodeB+ may be configured by the Operation Maintenance Center. In the present embodiment, description is made taking the case that the NodeB+ receives the multicasting IP address sent by an upper network node as an example, but the invention is not limited to this.

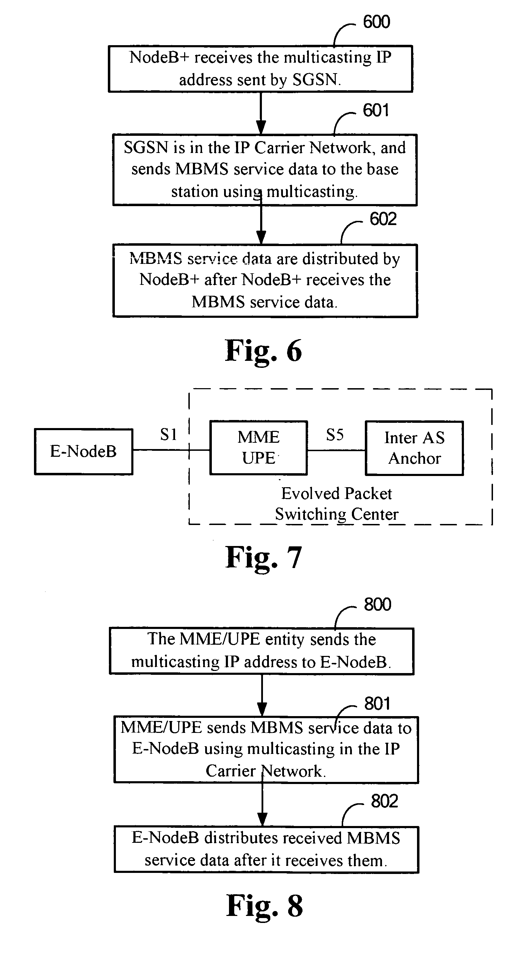

As illustrated in Fig. 6, the method includes the following steps.

Step 600: A NodeB+ receives the multicasting IP address sent by an SGSN.

In the present embodiment, the base station is a NodeB+. When a certain MBMS service is started (for example, it may be the operator who decides when to start the service), a Session Start message is sent by the SGSN to the NodeB+, notifying that a NodeB+ MBMS service starts. In that Session Start message, a multicasting IP address is carried.

It differs from the solution of the embodiment of WCDMA in that, in the flat architecture, because a NodeB+ has the function of an RNC, in which cell and through which channel MBMS service data are transmitted may be controlled by the NodeB+ itself. Thus, it is only necessary for the SGSN to send the NodeB+ address information about MBMS service data, i.e. the multicasting IP address used by the MBMS service data in the IP Bearer Network.

It should be noted that the above mentioned multicasting IP address needs to be added in the Session Start message by an SGSN, and is used as instruction information for the MBMS service to use the multicasting IP Bearer.

Step 601: The SGSN sends MBMS service data to the base station using multicasting mode through the IP Bearer Network.

In this step, in the IP Bearer Network of the SGSN and the NodeB+ (the interface is an luPS interface), the SGSN sends MBMS service data by multicasting, in which the destination IP address of the IP message is filled with the above mentioned IP address. The IP Bearer Network sends multicasting data to the base station according to the established multicasting route.

It is well known in the art that the IP Bearer Network may include a switch or a router, in order to realize the function of multicasting routing.

Furthermore, between the SGSN and the NodeB+, data of the application layer need to be encapsulated using GPRS Tunneling Protocol (GTP). In an embodiment of the invention, the Tunnel End Point Identifier (TEID) may be assigned by the sending node (SGSN), and may be notified to all receiving nodes (NodeB+). One multicasting data flow corresponds to one TEID, and all the receiving nodes identify the multicasting data flow using the same TEID.

Step 602: MBMS service data are distributed by the NodeB+ after the NodeB+ receives the MBMS service data.

Different processing is executed depending on the manner of MBMS service, there are the following cases:

If the MBMS service data are transmitted by means of MBMS broadcasting or a Single Frequency Network (SFN) mode, the NodeB+ broadcasts MBMS services in all the cells in its coverage.

If the MBMS service data are transmitted by means of MBMS enhanced broadcasting, multicasting, the NodeB+ counts the number of users in each cell in its coverage (MBMS Counting), and decides whether to transmit according to a specific algorithm, and selects to transmit using Point-To-Point (PTP) or Point-To-Multipoint (PTM) method.

The channel through which the NodeB+ distributes MBMS service data is an HS-DSCH or an SCCPCH.

Practically, in step 600, if the NodeB+ has not joined the corresponding multicasting group, the NodeB+ needs to send IGMP JOIN to join the multicasting group.

It should be understood that the following cases may exist in the process of MBMS service.

(1) In MBMS multicasting, the NodeB+ counts the number of users in the areas of its coverage. If there are no users, the NodeB+ sends an IGMP LEAVE message to the IP Bearer Network, notifying the IP Bearer Network that the NodeB+ leaves the multicasting group which the corresponding multicasting IP address belongs to, and notifies the SGSN.

In the modes of MBMS broadcasting, enhanced broadcasting and SFN, according to existing protocols, even there are no users in the coverage of the NodeB+, the NodeB+ still receives MBMS service data sent by the SGSN all the time.

(2) When the MBMS service stops (for example, the transmission is completed, or the service is decided to be stopped by the operator), the SGSN may send a Session Stop message, notifying the NodeB+ that the MBMS service has stopped. At this point, the NodeB+ sends an IGMP LEAVE message to leave the multicasting group.

Furthermore, to ensure that the requirements of the various combination mechanisms in the air interface are satisfied, an Air Interface Transmission Time Instruction is required to be carried in the MBMS service data sent by the SGSN. An option of the instruction is a NodeB+ time identification (BFN). The NodeB+ transmits data at the time instant which the BFN instructs. The NodeB+ BFNs may be synchronized using the Global Positioning System (GPS).

As described previously, in the case that one tunnel is supported, the upper network node may be composed of an SGSN and a GGSN. The SGSN is responsible for the function of control plane, and GGSN is responsible for the distribution of MBMS service data in the user plane.

In this case, the method for the IP Bearer Network to distribute MBMS service is generally similar to the solution in which the SGSN is used as the upper network node, and the detailed description will not be repeated. Difference lies in that the control plane signaling such as "Session Start Message" and "Session Stop Message" are still sent to the NodeB+ by the SGSN, but the MBMS service data as user plane data, are sent to the NodeB+ directly by the GGSN, and is no longer necessary to be sent through the SGSN.

Additionally, in order to increase the long term competitive power of its standards, the 3GPP organization proposes an LTE/SAE plan. Similar to HSPA+, in the LTE/SAE architecture, a flat architecture for down moving an RNC into a NodeB is used. It should be understood that, the solution provided by an embodiment of the invention may also be applied to the LTE/SAE network. Since the specific signaling and process of the current LTE/SAE network MBMS service has not been determined at present, the following embodiment mainly describes the principle of the solution.

Fig. 7 shows part of the LTE/SAE flat architecture network which is related with an embodiment of the invention. It should be noted that, in the present embodiment, the upper network node is a Mobile Manager Entity/User Plane Entity (MME/UPE), the base station is an E-NodeB. The interface between the two is an S1 interface. Fig. 8 is a flowchart illustrating the method in the LTE/SAE flat architecture provided in one embodiment of the invention.

Step 800: The MME/UPE entity sends the multicasting IP address to the E-NodeB.

When one MBMS service starts, the MME/UPE entity adds an instruction in the message notifying the E-NodeB of the start of the MBMS service. The instruction is used for instructing distributing MBMS service data by means of multicasting. The multicasting bearer instruction includes at least: Information about the address of the MBMS service to be sent, i.e. the multicasting IP address used by the MBMS service data in the IP Bearer Network.

It should be noted that the multicasting IP address used in the IP Bearer Network by the MBMS service data needs to be added in the message notifying the E-NodeB of the start of the MBMS service, as instruction information about using multicasting IP Bearer by the MBMS service. In other words, when a certain MBMS service starts, the MME/UPE entity notifies the E-NodeB that the MBMS service is sent by multicasting, in the way described above, in the process of establishing an MBMS service bearer with the Evolved RAN (E-NodeB), and notifies the multicasting IP address used in the MBMS service transmission.

Step 801: An MME/UPE sends MBMS service data to an E-NodeB using multicasting in the IP Bearer Network.

In this step, the MME/UPE entity sends MBMS service data using multicasting in the IP Bearer Network between the MME/UPE entity and the E-NodeB (the interface is an S1 interface). The destination IP address of the IP message is the multicasting IP address in the Transmission Control Information. The IP Bearer Network sends the MBMS service data to the base station by an established multicasting route.

Step 802: The E-NodeB distributes the received MBMS service data after receiving the data.

There are several cases of performing different processing according to the mode of the MBMS service.

If the MBMS service data are transmitted by means of MBMS broadcasting or Single Frequency Network (SFN) mode, the E-NodeB broadcasts MBMS service in all the cells in its coverage.

If the MBMS service data are transmitted by means of MBMS enhanced broadcasting, multicasting, the E-NodeB counts the number of users in each cell in its coverage (MBMS Counting), and decides whether to transmit according to a specific algorithm, and selects to transmit using Point-To-Point (PTP) or Point-To-Multipoint (PTM) method.

The channel which the E-NodeB distributes MBMS service data in is a Physical Share CHannel (PSCH) or a Physical Multicast CHannel (PMCH).

Practically, in step 800, if E-NodeB has not joined the corresponding multicasting group, the E-NodeB needs to send an IGMP JOIN message to join the multicasting group.

Similar to the case of HSPA+, there are the following situations in the process of MBMS service.

(1) In the mode of MBMS multicasting, the E-NodeB counts the number of users in the areas of its coverage. If there are no users, the E-NodeB sends IGMP LEAVE message to the IP Bearer Network, notifying the IP Bearer Network that the E-NodeB leaves the multicasting group which the corresponding multicasting IP address of the S1 interface belongs to, and notifies the MME/UPE.

In the modes of MBMS broadcasting, enhanced broadcasting and SFN, according to existing protocols, even there are no users in the coverage of the E-NodeB, the E-NodeB receives MBMS service data sent by the MME/UPE entity all the time.

(2) When the MBMS service stops (for example, the transmission is completed), the MME/UPE entity may send a Transmission Stop message (Session Stop message), notifying the E-NodeB that the MBMS service has stopped. At this point, the E-NodeB sends IGMP LEAVE to leave the multicasting group. Similar description has been provided in the previous embodiments, and will not be repeated.

Furthermore, if in the LTE/SAE network, combination mechanisms in air interfaces are introduced in, an Air Interface Transmission Time Instruction is required to be carried in the MBMS service data sent by the MME/UPE entity in a similar way, so that the E-NodeBs may distribute data simultaneously in air interfaces, to satisfy various combination requirements.

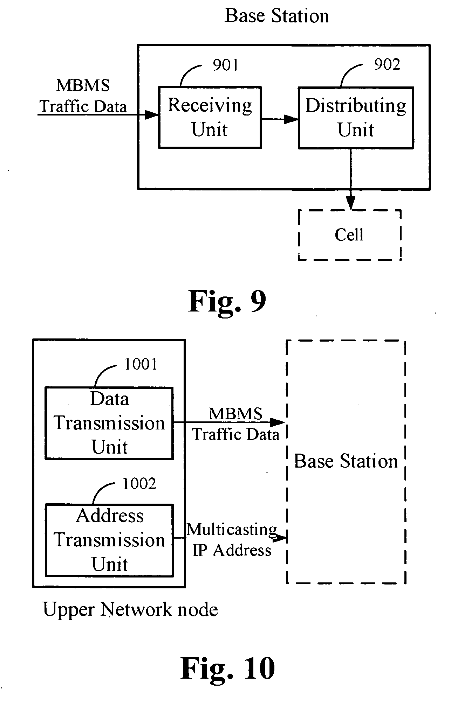

Corresponding to an embodiment of the above mentioned methods, another embodiment of the invention provides further solutions of apparatus and systems. Fig. 9 is a structure diagram of a base station provided in one embodiment of the invention. The base station is adapted to distribute MBMS service in the communication system of the IP Bearer Network, as shown in Fig. 9 (the part draw in solid line):

The base station includes a receiving unit 901 and a distributing unit 902. The receiving unit 901 is configured to receive MBMS service data which use a multicasting IP address and are sent by an upper network node by means of multicasting in an IP Bearer Network, according to the multicasting IP address configured locally (configured beforehand) or sent by the upper network node. The distributing unit 902 is configured to distribute the MBMS service data received by the receiving unit 901.

If the communication system is a Wideband CDMA (WCDMA) system, since the upper network node is a Radio Network Controller (RNC), and in which cell and through which channel to transmit MBMS service is decided by the RNC, therefore, the base station may further include an instruction information receiving unit configured to receive a cell identification of a cell in which it is necessary to initiate transmission of the MBMS service data sent by the RNC, and a channel identification of a channel through which the MBMS service data are sent. Hereby, the distributing unit 902 may distribute the MBMS service data in a cell corresponding to the cell identification received by the instruction information receiving unit, through a channel specified by the channel identification received by the instruction information receiving unit.

It should be understood that, since in an HSPA+ and LTE/SAE system, the base station has more powerful functions, and may decide to transmit in which cell and through which channel. In this case, the base station may further include: a determination unit configured to determine the cell in which it is necessary to transmit MBMS service data, and a channel through which the MBMS service data are transmitted. Therefore, the distributing unit 902 distributes MBMS service data through the channel determined by the determination unit in the cell determined by the determination unit.

Furthermore, as described before, the multicasting IP address may be sent through the upper network node or may be locally configured. After the base station learns the multicasting IP address, if the base station has not yet joined the multicasting group corresponding to the multicasting IP address at this time instant, the base station is required to join in. Thus, the base station may further include a multicasting unit configure to send an IGMP JOIN message to the IP Bearer Network, and join a multicasting group which the multicasting IP address belongs to, if the base station has not joined the multicasting group. The multicasting unit is further configured to send an IGMP LEAVE message to the IP Bearer Network, and leave the multicasting group, when none of the cells of the base station needs to receive MBMS service data.

Furthermore, the base station may further include a transmission instruction unit configured to instruct the distributing unit to stop transmitting MBMS service data to a certain cell. The situations in which transmission should be stopped may be: when MBMS service stops, the base station is notified by the upper network node. In a WCDMA system, the so called certain cell is one or more cells notified to the base station by the RNC, in which the transmission of MBMS service data is required to stop. Thus, the base station stops the transmission of MBMS service data in respective cells accordingly. In an HSPA+ or an LTE/SAE system, a Session Stop message may be sent by an upper network node to the base station, and the base station stops the transmission of MBMS service data in the corresponding cells.

Furthermore, an air interface transmission time identification may be carried in the MBMS service data. Correspondingly, the base station may further include: a time analysis unit adapted to obtain the air interface transmission time identification from the MBMS service data, and instructing the time when the distributing unit should distribute the MBMS service data according to the air interface transmission time identification. With this, the difference between the time points when the base stations transmit the same data is ensured to be in the allowable range for air interface combination. Specifically, the air interface transmission time identification may take different forms, such as a BFN. There are also many methods to obtain the air interface transmission time identification. Since the methods have been described in an embodiment of the invention, they will not be repeated here.

One embodiment of the invention further provides an upper network node apparatus for distributing MBMS service in a communication system of an IP Bearer Network. The system further includes a base station. As illustrated in Fig. 10 (the part in solid line), the upper network node includes:

A data sending unit 1001 configured to send a base station MBMS service data by means of multicasting in an IP Bearer Network.

Furthermore, the multicasting IP address may be sent by the upper network node or may be configured locally. If it is sent by the upper network node, the upper network node may further include an address sending unit 1002 configured to send the base station the multicasting IP address used by the MBMS service data.

Furthermore, in a WCDMA system, the upper network node is an RNC. The RNC further includes an instruction information sending unit configured to send the base station a cell identification of a cell in which it is necessary to initiate transmission, and send a channel identification of a channel through which the MBMS service data are transmitted. While in an evolved network, the base station may determine which cell the MBMS service data are transmitted to and which channel the MBMS service data are transmitted through.

Furthermore, the data transmission unit further includes: a time identification unit configured to add transmission time identification in the MBMS service data. Conformingly, the data transmission unit sends to the base station MBMS service data added with the transmission time identification by means of multicasting in the IP Bearer Network.

Additionally, if the MBMS service stops, the upper network node may notify the base station to stop transmission. Thus, the upper network node further includes: a transmission instruction unit configured to instruct the base station to stop transmitting MBMS service data to a certain cell. In a WCDMA system, the so called certain cell is one in which the transmission instruction unit is required to send the base station the identification, and the multicasting IP address. The identification corresponds to the cell in which the transmission of MBMS service data is required to be stopped. Thus, the base station stops the transmission of MBMS service data in respective cells accordingly.

One embodiment of the invention provides a communication system for distributing MBMS service in an IP Bearer Network. The system includes a base station and an upper network node.

The base station is configured to receive MBMS service data which use a multicasting IP address and are sent by the upper network node by means of multicasting in an IP Bearer Network, according to a multicasting IP address configured beforehand or sent by the upper network node, and distribute the-received MBMS service data.

The upper network node is configured to send the base station the MBMS service data which use the multicasting IP address by means of multicasting in the IP Bearer Network.

The system may further include a configuration unit for the local configuration of the multicasting IP address. The configuration unit may be an Operation Maintenance Center (OMC).

The function units which the base station and the upper network node may have, and the relationship between the function units, have been fully described in the apparatus embodiments, and the description will not be repeated in this system embodiment.

From the solution provided by the previous embodiments of the invention, it is obvious that, because the MBMS service data are distributed by means of multicasting in the IP Bearer Network, for the same kind of MBMS service data, it is required to send only once to all the base stations by the upper network node (including the base station in WCDMA and flat architecture network), the base station receives the MBMS service data in the form of multicasting, in the IP Bearer Network, according to the multicasting IP address notified by the upper network node, and sends the MBMS service data in the cells which require the transmission. Therefore, band width is greatly saved, the load on network is decreased, and the cost of providers is lowered.

For a WCDMA system, the RNC may send the base station the cell identification of the cells which require the transmission and the channel identification, and the received MBMS service data are transmitted by the base station accordingly. For a flat architecture network, the base station may decide by itself in which cell and through which channel to transmit.

For signal combination in various systems, in the solutions provided in an embodiment of the invention, the problem is solved by carrying an air interface transmission time identification in the MBMS service data sent by the upper network node, in order to ensure that the difference of time points when the same data are transmitted by the base stations is within an allowable range for air interface combination. For example, for a WCDMA system, the relationship between the RFN and the BFN may be obtained by the process of node synchronization notification, and it is sent to the base station by the RNC, and the base station obtains a new BFN hereby, and transmits MBMS service data in the air interface according to the new BFN. For the flat architecture, the BFNs of all base stations are synchronized using the Global Positioning System (GPS).

Furthermore, if the base station has not joined the multicasting group which the multicasting IP address belongs to, it is necessary for the base station to join in. 1f none of the cells in the coverage of the base station needs to receive MBMS service data, it is necessary for the base station to leave the multicasting group. When the MBMS service stops, the base station may be notified to stop transmission by the upper network nodes.

It should be noted that the IP Bearer Network mentioned in embodiments described above includes: Iub interface transmission network in the RNC-NodeB architecture carried by means of IP, the transmission network between a core network (CN) and a NodeB+ in the HSPA+ flat architecture, and the transmission network of S1 interface in the LTE/SAE architecture. The above mentioned IP Bearer Network may be called generally terrestrial transmission IP Bearer Networks. Besides, the solutions provided in embodiments of the invention may also be used in other communication systems.

What have been described above are only preferred embodiments of the invention, they are not intended to limit the scope of the invention.

## Claims

1. A method for distributing Multimedia Broadcasting/Multicasting Service, MBMS, service in an IP Bearer Network, **characterized by** comprising:
receiving (601, 801), by a base station in the IP Bearer Network, MBMS service data which use a multicasting IP address and are sent by an upper network node by means of multicasting in the IP Bearer Network, according to the multicasting IP address configured beforehand or sent by the upper network node, wherein destination IP address of the MBMS services data is filled with the multicasting IP address; and
distributing (602, 802), by the base station, the received MBMS service data.

2. The method according to claim 1, **characterized in that**:
the upper network node is a Radio Network Controller, RNC; and
the method further comprises:
receiving (300), by the base station, a cell identification of a cell in which it is necessary to initiate a transmission of the MBMS service data sent by the RNC, and a channel identification of a channel through which the MBMS service data are distributed.

3. The method according to claim 2, **characterized in that** the distributing the received MBMS service data by the base station comprises:
distributing (301), by the base station, the MBMS service data, in a cell which the cell identification corresponds to, through a channel specified by the channel identification.

4. The method according to claim 2, **characterized in that** the receiving the MBMS service data comprises:
receiving the MBMS service data carrying an air interface transmission time identification.

5. The method according to claim 1, **characterized by** further comprising:
sending, by the base station, to the IP Bearer Network an Internet Multicasting Management Protocol Join, IGMP JOIN, message, to join a multicasting group which the multicasting IP address belongs to, if the base station does not join the multicasting group.

6. The method according to claim 5, **characterized by** further comprising:
sending, by the base station, the IP Bearer Network an IGMP LEAVE message, to leave the multicasting group, if none of the cells of the base station needs to receive MBMS service data.

7. The method according to claim 1, **characterized by** further comprising:
receiving, by the base station, a Stop Transmission Notification sent by the upper network node; and
stopping, by the base station, the distribution of the MBMS service data, after the base station receives the Stop Transmission Notification.

8. A base station for distributing Multimedia Broadcasting/Multicasting Service, MBMS, service in a communication system comprising an IP Bearer Network, **characterized in that** the base station comprises:
a receiving unit (901), configured to receive MBMS service data which use a multicasting IP address and are sent by an upper network node by means of multicasting in the IP Bearer Network, according to the multicasting IP address configured beforehand or sent by the upper network node, wherein destination IP address of the MBMS services data is filled with the multicasting IP address; and
a distributing unit (902), configured to distribute the MBMS service data received by the receiving unit.

9. The base station according to claim 8, **characterized in that**:
the upper network node is a Radio Network Controller, RNC, if the communication system is a Wideband CDMA, WCDMA, system;
the base station further comprises:
an instruction information receiving unit, configured to receive a cell identification of a cell in which it is necessary to initiate a distribution of the MBMS service data received from the RNC, and a channel identification of a channel through which the MBMS service data are distributed; and
the distributing unit, configured to distribute the MBMS service data in a cell corresponding to the cell identification received by the instruction information receiving unit, through a channel specified by the channel identification received by the instruction information receiving unit.

10. The base station according to claim 8, **characterized by** further comprising:
a transmission instruction unit, configured to instruct the distributing unit to stop transmitting MBMS service data to a cell, after receiving an instruction of stopping distributing the cell MBMS service data sent by the upper network node.

11. The base station according to claim 8, **characterized in that** an air interface transmission time identification is carried in the MBMS service data;
the base station further comprises:
a time analysis unit, configured to obtain the air interface transmission time identification from the MBMS service data, and indicate the time when the distributing unit distributes the MBMS service data in the air interface according to the air interface transmission time identification.

12. An upper network node for transmitting MBMS service in a communication system comprising an IP Bearer Network, wherein the system further comprises a base station, **characterized in that** the upper network node comprises:
a data transmission unit (1001), configured to transmit the base station MBMS service data which use a multicasting IP address by means of multicasting in the IP Bearer Network, wherein destination IP address of the MBMS services data is filled with the multicasting IP address.

13. The upper network node according to claim 12, **characterized in that** if the communication system is a WCDMA system, the upper network node is an RNC, the RNC further comprises:
an instruction information sending unit, configured to send the base station a cell identification of a cell in which it is necessary to initiate transmission, and send the base station a channel identification of a channel through which the MBMS service data are transmitted.

14. The upper network node according to claim 12, **characterized in that** the data transmission unit further comprises:
a time identification unit, configured to add an air interface transmission time identification in the MBMS service data; and
the data transmission unit (1001) is configured to send the base station MBMS service data added with the transmission time identification by means of multicasting in the IP Bearer Network.

15. A communication system for distributing MBMS service in an IP Bearer Network, **characterized in that** the system comprises a base station and an upper network node, wherein
the base station is configured to receive MBMS service data which use a multicasting IP address and are sent by an upper network node by means of multicasting in the IP Bearer Network according to the multicasting IP address configured beforehand or sent by the upper network node, and distribute the received MBMS service data; and
the upper network node is configured to send the base station the MBMS service data which use the multicasting IP address by means of multicasting in the IP Bearer Network, wherein destination IP address of the MBMS services data is filled with the multicasting IP address.

## Patentansprüche

1. Verfahren zum Verteilen von Dienst des Multimedia Broadcasting/Multicasting Service MBMS in einem IP-Trägernetzwerk, **gekennzeichnet durch** die folgenden Schritte:
Empfangen (601, 801) von MBMS-Dienstdaten **durch** eine Basisstation in dem IP-Trägernetzwerk, die eine Multicasting-IP-Adresse verwenden und mittels Multicasting in dem IP-Trägernetzwerk **durch** einen oberen Netzwerkknoten gesendet werden, gemäß der im Voraus konfigurierten oder **durch** den oberen Netzwerkknoten gesendeten Multicasting-IP-Adresse, wobei die Ziel-IP-Adresse der MBMS-Dienstedaten mit der Multicasting-IP-Adresse gefüllt wird; und
Verteilen (602, 802) der empfangenen MBMS-Dienstdaten **durch** die Basisstation.

2. Verfahren nach Anspruch 1, **dadurch gekennzeichnet, dass**
der obere Netzwerkknoten ein Radio Network Controller RNC ist; und
das Verfahren ferner Folgendes umfasst:
Empfangen (300) einer Zellenidentifikation einer Zelle, in der es notwendig ist, eine Übertragung der durch den RNC gesendeten MBMS-Dienstdaten einzuleiten, und
einer Kanalidentifikation eines Kanals, durch den die MBMS-Dienstdaten verteilt werden, durch die Basisstation.

3. Verfahren nach Anspruch 2, **dadurch gekennzeichnet, dass** das Verteilen der empfangenen MBMS-Dienstdaten durch die Basisstation Folgendes umfasst:
Verteilen (301) der MBMS-Dienstdaten durch die Basisstation in einer Zelle, der die Zellenidentifikation entspricht, durch einen durch die Kanalidentifikation spezifizierten Kanal.

4. Verfahren nach Anspruch 2, **dadurch gekennzeichnet, dass** das Empfangen der MBMS-Dienstdaten Folgendes umfasst:
Empfangen der MBMS-Dienstdaten, die eine Funkschnittstellen-Übertragungszeitidentifikation führen.

5. Verfahren nach Anspruch 1, ferner **gekennzeichnet durch** den folgenden Schritt:
Senden einer Nachricht des Internet Multicasting Management Protocol Join IGMP JOIN **durch** die Basisstation zu dem IP-Trägernetzwerk, um sich einer Multicasting-Gruppe anzuschließen, zu der die Multicasting-IP-Adresse gehört, wenn sich die Basisstation nicht der Multicasting-Gruppe anschließt.

6. Verfahren nach Anspruch 5, ferner **gekennzeichnet durch** den folgenden Schritt:
Senden einer Nachricht IGMP LEAVE **durch** die Basisstation zu dem IP-Trägernetzwerk, die Multicasting-Gruppe zu verlassen, wenn keine der Zellen der Basisstation MBMS-Dienstdaten empfangen muss.

7. Verfahren nach Anspruch 1, ferner **gekennzeichnet durch** die folgenden Schritte:
Empfangen einer **durch** den oberen Netzwerkknoten gesendeten Übertragungsstoppbenachrichtigung **durch** die Basisstation; und
Stoppen der Verteilung der MBMS-Dienstdaten **durch** die Basisstation, nachdem die Basisstation die Übertragungsstoppbenachrichtigung empfängt.

8. Basisstation zum Verteilen von Dienst des Multimedia Broadcasting/Multicasting Service MBMS in einem Kommunikationssystem, das ein IP-Trägernetzwerk umfasst, **dadurch gekennzeichnet, dass** die Basisstation Folgendes umfasst:
eine Empfangseinheit (901), ausgelegt zum Empfangen von MBMS-Dienstdaten, die eine Multicasting-IP-Adresse verwenden und mittels Multicasting in dem IP-Trägernetzwerk durch einen oberen Netzwerkknoten gesendet werden, gemäß der im Voraus konfigurierten oder durch den oberen Netzwerkknoten gesendeten Multicasting-IP-Adresse, wobei die Ziel-IP-Adresse der MBMS-Dienstedaten mit der Multicasting-IP-Adresse gefüllt ist; und
eine Verteilungseinheit (902), ausgelegt zum Verteilen der durch die Empfangseinheit empfangenen MBMS-Dienstdaten.

9. Basisstation nach Anspruch 8, **dadurch gekennzeichnet, dass**
der obere Netzwerkknoten ein Radio Network Controller RNC ist, wenn das Kommunikationssystem ein System des Breitband CDMA WCDMA ist;
die Basisstation ferner Folgendes umfasst:
eine Anweisungsinformations-Empfangseinheit, ausgelegt zum Empfangen einer Zellenidentifikation einer Zelle, in der es notwendig ist, eine Verteilung der von dem RNC empfangenen MBMS-Dienstdaten einzuleiten, und einer Kanalidentifikation eines Kanals, durch den die MBMS-Dienstdaten verteilt werden; und
die Verteilungseinheit, ausgelegt zum Verteilen der MBMS-Dienstdaten in einer Zelle, die der durch die Anweisungsinformations-Empfangseinheit empfangenen Zellenidentifikation entspricht, durch einen Kanal, der durch die durch die Anweisungsinformations-Empfangseinheit empfangene Kanalidentifikation spezifiziert ist.

10. Basisstation nach Anspruch 8, **dadurch gekennzeichnet, dass** sie ferner Folgendes umfasst:
eine Übertragungsanweisungseinheit, ausgelegt zum Anweisen der Verteilungseinheit, das Übertragen von MBMS-Dienstdaten zu einer Zelle zu stoppen, nachdem eine durch den oberen Netzwerkknoten gesendete Anweisung des Stoppens des Verteilens der Zellen-MBMS-Dienstdaten empfangen wird.

11. Basisstation nach Anspruch 8, **dadurch gekennzeichnet, dass** eine Funkschnittstellen-Übertragungszeitidentifikation in den MBMS-Dienstdaten geführt wird; und
die Basisstation ferner Folgendes umfasst:
eine Zeitanalyseeinheit, ausgelegt zum Erhalten der Funkschnittstellen-Übertragungszeitidentifikation aus den MBMS-Dienstdaten und Angeben der Zeit, wann die Verteilungseinheit die MBMS-Dienstdaten in der Funkschnittstelle verteilt, gemäß der Funkschnittstellen-Übertragungszeitidentifikation.

12. Oberer Netzwerkknoten zum Übertragen des MBMS-Dienstes in einem Kommunikationssystem, das ein IP-Trägernetzwerk umfasst, wobei das System ferner eine Basisstation umfasst, **dadurch gekennzeichnet, dass** der obere Netzwerkknoten Folgendes umfasst:
eine Datenübertragungseinheit (1001), ausgelegt zum Übertragen von MBMS-Dienstdaten zu der Basisstation, die eine Multicasting-IP-Adresse verwenden, mittels Multicasting in dem IP-Trägernetzwerk, wobei die Ziel-IP-Adresse der MBMS-Dienstedaten mit der Multicasting-IP-Adresse gefüllt ist.

13. Oberer Netzwerkknoten nach Anspruch 12, **dadurch gekennzeichnet, dass**, wenn das Kommunikationssystem ein WCDMA-System ist, der obere Netzwerkknoten ein RNC ist, wobei der RNC ferner Folgendes umfasst:
eine Anweisungsinformations-Sendeeinheit, ausgelegt zum Senden einer Zellenidentifikation einer Zelle, in der es notwendig ist, Übertragung einzuleiten, zu der Basisstation und zum Senden einer Kanalidentifikation eines Kanals, durch den die MBMS-Dienstdaten übertragen werden, zu der Basisstation.

14. Oberer Netzwerkknoten nach Anspruch 12, **dadurch gekennzeichnet, dass** die Datenübertragungseinheit ferner Folgendes umfasst:
eine Zeitidentifikationseinheit, ausgelegt zum Hinzufügen einer Funkschnittstellen-Übertragungszeitidentifikation in den MBMS-Dienstdaten; und
die Datenübertragungseinheit (1001), ausgelegt zum Senden von MBMS-Dienstdaten mit hinzugefügter Übertragungszeitidentifikation zu der Basisstation mittels Multicasting in dem IP-Trägernetzwerk.

15. Kommunikationssystem zum Verteilen von MBMS-Dienst in einem IP-Trägernetzwerk, **dadurch gekennzeichnet, dass** das System eine Basisstation und einen oberen Netzwerkknoten umfasst, wobei
die Basisstation ausgelegt ist zum Empfangen von MBMS-Dienstdaten, die eine Multicasting-IP-Adresse verwenden und durch einen oberen Netzwerkknoten mittels Multicasting in dem IP-Trägernetzwerk gesendet werden, gemäß der im Voraus konfigurierten oder durch den oberen Netzwerkknoten gesendeten Multicasting-IP-Adresse und zum Verteilen der empfangenen MBMS-Dienstdaten; und
der obere Netzwerkknoten ausgelegt ist zum Senden der MBMS-Dienstdaten zu der Basisstation, die die Multicasting-IP-Adresse verwenden, mittels Multicasting in dem IP-Trägernetzwerk, wobei die Ziel-IP-Adresse der MBMS-Dienstedaten mit der Multicasting-IP-Adresse gefüllt ist.

## Revendications

1. Procédé de distribution d'un service de Diffusion/Multidiffusion Multimédia, MBMS, dans un Réseau de Support IP, **caractérisé en ce qu'**il comprend :
la réception (601, 801), par une station de base dans le Réseau de Support IP, de données de service MBMS qui utilisent une adresse IP de multidiffusion et qui sont envoyées par un noeud de réseau supérieur par multidiffusion dans le Réseau de Support IP, en fonction de l'adresse IP de multidiffusion configurée préalablement ou envoyée par le noeud de réseau supérieur, l'adresse IP de destination des données de service MBMS étant remplie par l'adresse IP de multidiffusion ; et
la distribution (602, 802), par la station de base, des données de service MBMS reçues.

2. Procédé selon la revendication 1, **caractérisé en ce que** :
le noeud de réseau supérieur est un Contrôleur de Réseau Radio, RNC ; et
le procédé comprend en outre :
la réception (300), par la station de base, d'une identification de cellule d'une cellule dans laquelle il convient de lancer une transmission des données de service MBMS envoyées par le RNC, et d'une identification de canal d'un canal par le biais duquel les données de service MBMS sont distribuées.

3. Procédé selon la revendication 2, **caractérisé en ce que** la distribution des données de service MBMS reçues par la station de base comprend :
la distribution (301), par la station de base, des données de service MBMS, dans une cellule à laquelle correspond l'identification de cellule, par le biais d'un canal spécifié par l'identification de canal.

4. Procédé selon la revendication 2, **caractérisé en ce que** la réception des données de service MBMS comprend :
la réception des données de service MBMS portant une identification de temps de transmission sur l'interface radio.

5. Procédé selon la revendication 1, **caractérisé en ce qu'**il comprend en outre :
l'envoi, par la station de base, au Réseau de Support IP, d'un message de Jonction au Protocole de Gestion de Multidiffusion Internet, ou IGMP JOIN, afin de se joindre à un groupe de multidiffusion auquel appartient l'adresse IP de multidiffusion, si la station de base ne se joint pas au groupe de multidiffusion.

6. Procédé selon la revendication 5, **caractérisé en ce qu'**il comprend en outre :
l'envoi, par la station de base, au Réseau de Support IP, d'un message IGMP LEAVE, pour quitter le groupe de multidiffusion, si aucune des cellules de la station de base n'a besoin de recevoir de données de service MBMS.

7. Procédé selon la revendication 1, **caractérisé en ce qu'**il comprend en outre :
la réception, par la station de base, d'une Notification d'Arrêt de Transmission envoyée par le noeud de réseau supérieur ; et
l'arrêt, par la station de base, de la distribution des données de service MBMS, après la réception par la station de base de la Notification d'Arrêt de Transmission.

8. Station de base pour la distribution d'un service de Diffusion/Multidiffusion Multimédia, MBMS, dans un système de communication comprenant un Réseau de Support IP, **caractérisée en ce que** la station de base comprend :
une unité de réception (901), configurée pour recevoir des données de service MBMS qui utilisent une adresse IP de multidiffusion et qui sont envoyées par un noeud de réseau supérieur par multidiffusion dans le Réseau de Support IP, en fonction de l'adresse IP de multidiffusion configurée préalablement ou envoyée par le noeud de réseau supérieur, l'adresse IP de destination des données de service MBMS étant remplie par l'adresse IP de multidiffusion ; et
une unité de distribution (902), configurée pour distribuer les données de service MBMS reçues par l'unité de réception.

9. Station de base selon la revendication 8, **caractérisée en ce que** :
le noeud de réseau supérieur est un Contrôleur de Réseau Radio, RNC, si le système de communication est un système CDMA à large bande, WCDMA ;
la station de base comprenant en outre :
une unité de réception d'informations d'instructions, configurée pour recevoir une identification de cellule d'une cellule dans laquelle il convient de lancer une distribution des données de service MBMS reçues depuis le RNC, et une identification de canal d'un canal par le biais duquel les données de service MBMS sont distribuées ; et
l'unité de distribution, configurée pour distribuer les données de service MBMS dans une cellule correspondant à l'identification de cellule reçue par l'unité de réception d'informations d'instructions, par le biais d'un canal spécifié par l'identification de canal reçue par l'unité de réception d'informations d'instructions.

10. Station de base selon la revendication 8, **caractérisée en ce qu'**elle comprend en outre :
une unité d'instructions de transmission, configurée pour ordonner à l'unité de distribution d'arrêter de transmettre des données de service MBMS à une cellule, après qu'elle a reçu une instruction d'arrêt de distribution des données de service MBMS de cellule envoyée par le noeud de réseau supérieur.

11. Station de base selon la revendication 8, **caractérisée en ce qu'**une identification de temps de transmission sur l'interface radio est portée dans les données de service MBMS ;
la station de base comprenant en outre :
une unité d'analyse temporelle, configurée pour obtenir l'identification de temps de transmission sur l'interface radio à partir des données de service MBMS, et indiquer le moment auquel l'unité de distribution distribue les données de service MBMS dans l'interface radio en fonction de l'identification de temps de transmission sur l'interface radio.

12. Noeud de réseau supérieur pour transmettre un service MBMS dans un système de communication comprenant un Réseau de Support IP, le système comprenant en outre une station de base, **caractérisé en ce que** le noeud de réseau supérieur comprend :
une unité de transmission de données (1001), configurée pour transmettre à la station de base des données de service MBMS qui utilisent une adresse IP de multidiffusion par multidiffusion dans le Réseau de Support IP, l'adresse IP de destination des données de service MBMS étant remplie par l'adresse IP de multidiffusion.

13. Noeud de réseau supérieur selon la revendication 12, **caractérisé en ce que** si le système de communication est un système WCDMA, le noeud de réseau supérieur est un RNC, le RNC comprenant en outre :
une unité d'envoi d'informations d'instructions, configurée pour envoyer à la station de base une identification de cellule d'une cellule dans laquelle il convient de lancer une transmission, et envoyer à la station de base une identification de canal d'un canal par le biais duquel les données de service MBMS sont transmises.

14. Noeud de réseau supérieur selon la revendication 12, **caractérisé en ce que** l'unité de transmission de données comprend en outre :
une unité d'identification temporelle, configurée pour ajouter une identification de temps de transmission sur l'interface radio dans les données de service MBMS ; et
l'unité de transmission de données (1001) est configurée pour envoyer à la station de base des données de service MBMS avec l'identification de temps de transmission par multidiffusion dans le Réseau de Support IP.

15. Système de communication pour distribuer un service MBMS dans un Réseau de Support IP, **caractérisé en ce que** le système comprend une station de base et un noeud de réseau supérieur, dans lequel
la station de base est configurée pour recevoir des données de service MBMS qui utilisent une adresse IP de multidiffusion et qui sont envoyées par un noeud de réseau supérieur par multidiffusion dans le Réseau de Support IP, en fonction de l'adresse IP de multidiffusion configurée préalablement ou envoyée par le noeud de réseau supérieur, et distribuer les données de service MBMS reçues ; et
le noeud de réseau supérieur est configuré pour envoyer à la station de base les données de service MBMS qui utilisent l'adresse IP de multidiffusion par multidiffusion dans le Réseau de Support IP, l'adresse IP de destination des données de service MBMS étant remplie par l'adresse IP de multidiffusion.
